(19) Europäisches Patentamt / European Patent Office / Office européen des brevets

(11) **EP 4 394 748 A1**

(12) **EUROPEAN PATENT APPLICATION**
published in accordance with Art. 153(4) EPC

(43) Date of publication:
**03.07.2024 Bulletin 2024/27**

(51) International Patent Classification (IPC):
**G09F 9/30** (2006.01)　　　　**G09G 3/30** (2006.01)

(21) Application number: **22944026.8**

(22) Date of filing: **14.12.2022**

(86) International application number:
**PCT/CN2022/138841**

(87) International publication number:
**WO 2024/103474 (23.05.2024 Gazette 2024/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.11.2022　CN 202211440746**

(71) Applicant: **Novatech Co., Ltd**
**Zhejiang, Zhejiang 313100 (CN)**

(72) Inventors:
• **MAURIZIO, Mollinelli**
**61010 Tavullia (PU) (IT)**
• **SHEN, Yanan**
**Huzhou, Zhejiang 313100 (CN)**
• **ZHOU, Xiaoping**
**Huzhou, Zhejiang 313100 (CN)**
• **CHENG, Bei**
**Huzhou, Zhejiang 313100 (CN)**
• **YU, Chuan**
**Huzhou, Zhejiang 313100 (CN)**
• **ZHAN, Daojun**
**Huzhou, Zhejiang 313100 (CN)**

(74) Representative: **Dai, Simin**
**Reyda IP**
**157, Quai du Président Roosevelt**
**Appt A073**
**92130 Issy-les-Moulineaux (FR)**

(54) **WHITE LIGHT COLOR RENDERING APPARATUS BASED ON GLASS CERAMIC PANEL AND LIGHT COLOR ADJUSTING METHOD THEREFOR**

(57)　　The present disclosure provides a white light color rendering device based on a microcrystalline glass panel and a method for adjusting a light color thereof. The present disclosure uses a light color adjustment technique to display white light on a color rendering device composed of a microcrystalline glass panel and a light source. In terms of hardware, the light source and the microcrystalline glass panel are required. In terms of method, the light color adjustment technique proposed includes that, according to filtering characteristics of the microcrystalline glass panel and the white region range in the chromaticity coordinate map, by adjusting optical parameters (e.g., light intensity, spectral range, full width at half maxima) affecting the chromaticity coordinates of the light source, light transmits through the device composed of the light source and the microcrystalline glass and displays white. With a simple structure and stable luminous characteristics, only by adjusting the light color of the light source, the device can solve the problem that the microcrystalline glass panel cannot display white light, which is of great significance for the microcrystalline glass panel to display light.

FIG. 1

**Description**

**TECHNICAL FIELD**

The present disclosure utilizes a light color adjusting technique for white light color development of a display component composed of a microcrystalline glass panel and a light source, which relates to the fields including a color mixing adjustment technique in photometry, a spectral analysis technique, and a white display technique and the application fields including but not limited to stove top display, curtain wall display, aerospace display, etc.

**BACKGROUND**

Microcrystalline glass is widely used in fields such as aerospace, architectural decoration, furniture life, consumer electronics, etc. for its excellent characteristics including high hardness, corrosion resistance, compression resistance, impact resistance, non-absorbent, less dust, non-radiation, etc. A display device of a microcrystalline glass panel used in building decoration and furniture life appliances is often composed of a dark or brown low-transparent coloring microcrystalline glass panel sheet (substrate) and a signal lamp (light source). The microcrystalline glass panel paired with the signal lamp often serves as a display panel. The signal lamp informs the user about an operating status (on, standby, normal, abnormal, etc.), operating hours, and operating mode through the display panel. In a display device (stove top, freezer, etc.) of the furniture life, a small LED digital tube is often used as a lamp. In an architectural curtain wall display, an LED panel, a fluorescent lamp, or a quantum dot panel are often used as the lamp. Since the microcrystalline glass panel has a visible light cutoff filtering property, only red light and infrared light are transmitted through the display panel, making it difficult to satisfy the diverse display needs of users.

As the most difficult color in modern displays, white often requires the use of three primary colors of red, green, and blue mixed in equal proportions. For the microcrystalline glass panel, it is even more difficult to display white. As for the prior art, there is only one solution in which a filter or a filter film is added between the microcrystalline glass panel and the light source to render color (see Patent CN103250004B). The solution increases the production cost and reduces the reliability and life of rendering the color of a display device. More importantly, at the expense of the light intensity of the light source, the solution reduces the display effect of the device, making the color dull and the key contrast low in a bright field with sufficient lighting, which causes inconvenience to the customer during use and leads to a security risk.

**SUMMARY**

The present disclosure provides a white light color rendering device based on the microcrystalline glass panel and a light color adjusting method thereof. The white light color rendering device is used in a simple and reliable implementation form to enhance the power of the light transmitting through the microcrystalline glass panel, which maximizes the intensity and spectral efficiency of a light tool and makes the light tool display white light, thereby solving the technical problems in the prior art that the color is dim and the cost is high by adding an optical compensator such as a filter or a filter film between the light source and the microcrystalline glass panel.

The technical solution of the present disclosure is as follows:

The white light color rendering device based on the microcrystalline glass panel is provided, which includes a microcrystalline glass panel and a light source. The microcrystalline glass panel has a display surface. The light source is located on a side of a non-display surface of the microcrystalline glass panel, and the light source displays a white light or a white light with color differences on the display surface of the microcrystalline glass panel. A chromaticity coordinate region W1 presented by a transmitted light of a CIE standard illuminant through the microcrystalline glass panel in the CIE standard chromaticity system is determined by the following coordinates shown in Table 1.

Table 1 Chromaticity coordinate region W1 presented by a transmitted light of a microcrystalline glass panel

| x | y |
|------|------|
| 0.68 | 0.31 |
| 0.71 | 0.29 |
| 0.65 | 0.34 |
| 0.63 | 0.36 |
| 0.61 | 0.38 |
| 0.56 | 0.2 |

(continued)

| x | y |
|---|---|
| 0.58 | 0.4 |
| 0.54 | 0.42 |
| 0.36 | 0.34 |
| 0.28 | 0.24 |

The light source transmits light through the microcrystalline glass panel to display a white light, and a white chromaticity coordinate region W2 is obtained according to a CIE whiteness equation and a color tolerance equation, which is determined by the following coordinates shown in Table 2.

Table 2 White chromaticity coordinate region W2 of the white light color rendering device

| Color temperature | Chromaticity coordinate x | Chromaticity coordinate y |
|---|---|---|
| 4200 | 0.40 | 0.49 |
| 4950 | 0.36 | 0.49 |
| 6030 | 0.31 | 0.49 |
| 7150 | 0.27 | 0.47 |
| 9000 | 0.23 | 0.43 |
| 12570 | 0.19 | 0.39 |
| 21270 | 0.17 | 0.34 |
| ∞ | 0.15 | 0.29 |
| ∞ | 0.13 | 0.23 |
| ∞ | 0.13 | 0.19 |
| ∞ | 0.14 | 0.15 |
| ∞ | 0.17 | 0.12 |
| ∞ | 0.21 | 0.13 |
| ∞ | 0.26 | 0.16 |
| ∞ | 0.30 | 0.18 |
| 11730 | 0.33 | 0.19 |
| 2220 | 0.37 | 0.22 |
| 1810 | 0.42 | 0.25 |
| 1670 | 0.48 | 0.29 |
| 1670 | 0.51 | 0.33 |
| 1780 | 0.53 | 0.38 |
| 1880 | 0.54 | 0.41 |
| 2430 | 0.50 | 0.44 |
| 3130 | 0.46 | 0.47 |

Preferably, the microcrystalline glass panel has an average transmittance of not larger than 7% within a visible spectrum range of 380 nm-780 nm.

Preferably, a spectrum of the light source has 1-4 intrinsic peaks, each of the intrinsic peaks corresponds to an illuminator or luminescent material, and a full width at half maxima of each of the intrinsic peaks is more than 10 nm.

Preferably, the light source constitutes a light-emitting component including one of an LED component, a fluorescent component, and a quantum dot component.

The present disclosure also provides a light color adjusting method of the white light color rendering device based on the microcrystalline glass panel. The method includes adjusting optical parameters of the light source to adjust a spectral coverage range so that a light emitted by the light source transmits through the microcrystalline glass panel and displays a white light in the white chromaticity coordinate region W2, the optical parameters including intensity and a full width of a main wavelength spectrum.

Preferably, the method is implemented based on a law of complementary colors of Grassman's color mixing theory, and specifically includes the following steps:

(1) a transmittance function $\varphi_i(\lambda)$ of the microcrystalline glass panel is measured in a photometric, where i denotes a serial number of the microcrystalline glass panel, and a chromaticity region W1 corresponding to the microcrystalline glass panel is obtained based on a stimulus equation and a color matching function of the CIE standard chromaticity system;

$$X_i = k \sum_{380}^{780} \varphi_i(\lambda)\bar{x}(\lambda)\Delta\lambda \quad (1-1)$$

$$Y_i = k \sum_{380}^{780} \varphi_i(\lambda)\bar{y}(\lambda)\Delta\lambda \quad (1-2)$$

$$Z_i = k \sum_{380}^{780} \varphi_i(\lambda)\bar{z}(\lambda)\Delta\lambda \quad (1-3)$$

$$k = \frac{100}{\sum_{380}^{780} \varphi_i(\lambda)\bar{y}(\lambda)\Delta\lambda} \quad (1-4)$$

$$x_i = \frac{X_i}{X_i + Y_i + Z_i} \quad (1-5)$$

$$y_i = \frac{Y_i}{X_i + Y_i + Z_i} \quad (1-6)$$

$$z_i = \frac{Z_i}{X_i + Y_i + Z_i} \quad (1-7)$$

wherein $X_i$, $Y_i$, and $Z_i$ denote tri-stimulus values of the microcrystalline glass panel, $x_i$, $y_i$, and $z_i$ denote chromaticity coordinates of the microcrystalline glass panel, $\bar{x}(\lambda)$, $\bar{y}(\lambda)$, and $\bar{z}(\lambda)$ denote functions of the tri-stimulus values in a CIE1931 standard chromaticity observing system, $\Delta\lambda$ denotes a wavelength spacing, and $\lambda$ denotes a wavelength;

for any microcrystalline glass panel chromaticity coordinate in a chromaticity region W1 corresponding to the microcrystalline glass panel, a tangent line to the white chromaticity coordinate region W2 is made through a point of the microcrystalline glass panel chromaticity coordinate. An intersection between the tangent line and a spectral trace line in a chromaticity coordinate map is a chromaticity coordinate of a white complementary color of the light source that transmits through the microcrystalline glass panel and displays a white light. A region surrounded by the tangent line and the spectral trace line is a light color adjustment range W3 of the light source of the white light color rendering device;

(2) a white chromaticity coordinate point (u, v) is selected in the white chromaticity coordinate region W2, wherein the chromaticity coordinates of the microcrystalline glass panel are given as $(x_i, y_i)$, and then target chromaticity coordinates $(m_i, n_i)$ of the light source are obtained according to the following Equations (2-1) to (2-2):

$$u = \frac{1}{2} \sum_{380}^{780} \frac{x_i^{''}(\lambda) m_i^{''}(\lambda)}{\bar{x}'(\lambda)} \Delta\lambda \quad (2-1)$$

$$v = \frac{1}{2} \sum_{380}^{780} \frac{y_i^{''}(\lambda) n_i^{''}(\lambda)}{\bar{y}'(\lambda)} \Delta\lambda \quad (2-2)$$

wherein $x_i^{''}(\lambda)$ and $y_i^{''}(\lambda)$ denote second-order derivatives of a chromaticity-wavelength function of the microcrystalline glass relative to $\lambda$, respectively, $n_i^{''}(\lambda)$ and $m_i^{''}(\lambda)$ denote second-order derivatives of a chromaticity -wavelength function of the light source relative to $\lambda$, respectively, and $\bar{x}'(\lambda)$ and $\bar{y}'(\lambda)$ denote first-order derivatives of a color matching function in the CIE 1931 standard chromaticity observing system relative to $\lambda$, respectively; and
(3) a light source with chromaticity coordinates of $(m_i, n_i)$ in W3 is selected, or the chromaticity coordinates of the light source are adjusted to $(m_i, n_i)$ by adjusting the optical parameters of the light source, such that a light emitted by the light source transmits through a display surface of the microcrystalline glass panel having chromaticity coordinates of $(x_i, y_i)$ and displays a white light in the white chromaticity coordinate region W2, or displays a white light having white chromaticity coordinates of (u, v).

Preferably, any point in the chromaticity region W1 corresponding to the microcrystalline glass panel or a point having the chromaticity coordinates of $(x_i, y_i)$ of the microcrystalline glass panel may be selected to be connected to an isoenergetic white light point (0.333, 0.333) in the chromaticity coordinate map and an extension line may be made. A dominant wavelength of a spectral color at any point (except the isoenergetic white light point) on a connection line from an intersection of the extension line and a spectral trace line to the isoenergetic white light point (0.333, 0.333) is a dominant wavelength of a standard white light complementary color of the light source.
A light source having a chromaticity coordinate of $(m_i, n_i)$ on the connection line from the intersection of the extension line and the spectral trace line to the isoenergetic white light point (0.333, 0.333) may be selected, or the optical parameters of the light source may be adjusted to adjust the chromaticity coordinates of the light source to $(m_i, n_i)$, such that the light emitted by the light source transmits through the display surface of the microcrystalline glass panel having the white chromaticity coordinates $(x_i, y_i)$ and displays a white light with the white chromaticity coordinates (u, v).
Advantages of the present disclosure:

(1) The present disclosure only uses the light source and the microcrystalline glass panel as the white light color rendering device, through the light color adjustment technique, the spectral efficiency of the light source may be maximized, and a light that transmits through the microcrystalline glass panel may be made to be white. The device is of a simple and reliable structure. Compared with another white light rendering solution (Patent No. CN201180059416.5), the white light color rendering device of the present invention is used without a need for additional shading ink or light filter compensator, which has a simple manufacturing process and a high qualification rate. The device may be suitable for a plurality of application scenarios, especially for white display scenarios of narrow space and high-intensity structures such as white display on the stove surface, aerospace, etc.
(2) Compared with the prior art (Patent No. CN201180059416.5) in the white color rendering solution, the present disclosure may utilize the spectral efficiency (light intensity, spectral range, full width at half maxima of the main wavelength spectrum) of the light source maximally under the same white light color rendering intensity. The white light color rendering device may have a low power consumption high adjustability of a white light color temperature, and high color tolerance, which is suitable for a plurality of display scenarios such as a small signal lamp or a display unit. A white region with a color temperature may cover from 1670K to positive infinity and a color difference less than 1.5 may be provided, which may provide a good display of white under bright and dark illumination (e.g., bright field of view illumination >10cd/m$^2$, dark field of view illumination <1cd/m$^2$).

## BRIEF DESCRIPTION OF THE DRAWINGS

FIG. 1 is a graph illustrating a region range of W1-W4 in Example 1;

FIG. 2 is a graph illustrating spectral transmittance curves of 21 glasses in Example 1;

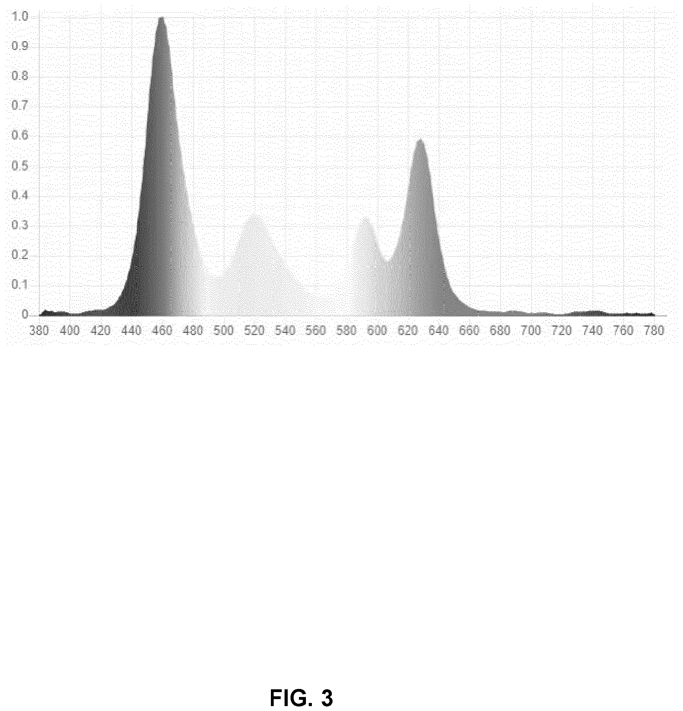

FIG. 3 is a diagram illustrating a spectral distribution of RGBA tetrachromatic lamp beads in Example 2 at equal power;

FIG. 4 is a diagram illustrating a transmission spectral distribution of a microcrystalline glass panel in Example 2;

FIG. 5 is a diagram illustrating a spectral distribution of RGBA tetrachromatic lamp beads used in a white light color rendering device in Example 2 when white color is rendered;

FIG. 6 is a diagram illustrating a distribution of chromaticity coordinates of a light source, a microcrystalline glass panel, and a white light color rendering device in Example 2 when the white light color rendering device is rendering white color;

FIG. 7 is a diagram illustrating a spectral distribution of RGB trichromatic lamp beads in Example 3 at equal power;

FIG. 8 is a diagram illustrating a transmission spectral distribution of a microcrystalline glass panel in Example 3;

FIG. 9 is a diagram illustrating a spectral distribution of RGB trichromatic lamp beads used in a white light color rendering device in Example 3 when white color is rendered;

FIG. 10 is a diagram illustrating a distribution of chromaticity coordinates of a light source, a microcrystalline glass panel, and a white light color rendering device in Example 3 when the white light color rendering device is rendering white color;

FIG. 11 is a diagram illustrating a spectral distribution of an LED light source in Example 4 at equal power;

FIG. 12 is a diagram illustrating a transmission spectral distribution of a microcrystalline glass panel in Example 4;

FIG. 13 is a diagram illustrating a spectral distribution of an LED light source used in a white light color rendering device in Example 4 when white color is rendered;

FIG. 14 is a diagram illustrating a distribution of chromaticity coordinates of a light source, a microcrystalline glass panel, and a white light color rendering device in Example 4 when the white light color rendering device is rendering white color; and

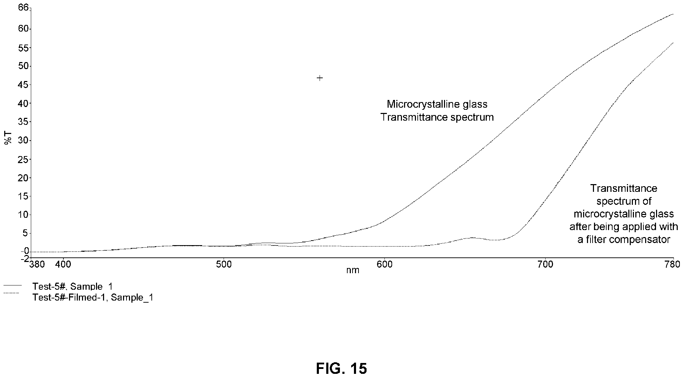

FIG. 15 is a diagram illustrating a transmittance spectrum before and after applying a filter compensator to a microcrystalline glass panel in a contrasting example.

## DETAILED DESCRIPTION

The present disclosure is further described below in connection with the embodiments and the accompanying drawings, but it cannot be used to limit the scope of protection of the present disclosure.

### Example 1

The present embodiment uses a light color adjustment technique to display white light on a display component composed of a microcrystalline glass panel and a light source, wherein a chromaticity coordinate of the microcrystalline glass panel is taken as known information, by adjusting optical parameters of the light source to perform a light color adjustment, the light source displays a white light on a display surface of the microcrystalline glass panel, the white light displayed on the display surface is in a white chromaticity coordinate region W2, and a chromaticity coordinate of a light on a side of a non-display surface is an intrinsic chromaticity coordinate of the light source, which is different from the chromaticity coordinate on the display surface.

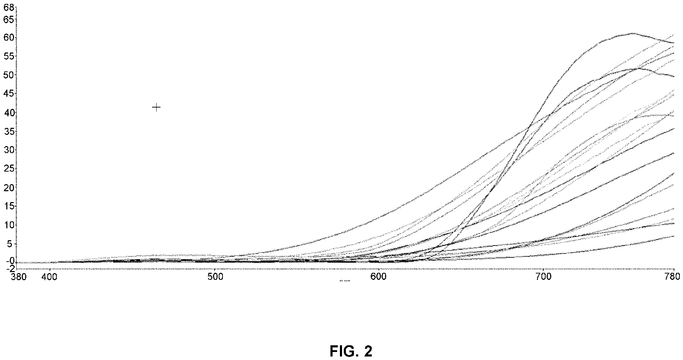

White light color rendering device consists of a light source and a microcrystalline glass panel and chooses the black microcrystalline glass with a visible light transmittance rate of not more than 7% as the display panel. According to a CIE 1931 standard chromaticity observing system, "Specification of Colors" (GB/T3977-2008), "Methods for the Measurement of Object Color" (GB/T3978-2008), "Measurement Method of Object Color" (GB/T3979-2008) and "Determination of Light Transmittance, Solar Direct Transmittance, Total Solar Energy Transmittance, and Ultraviolet Transmittance for Glass in Building and Glazing Factors" (GB/T2680-94), a spectrophotometer is applied in experimental conditions such as field of view angle being 1°-4°, field of view brightness being greater than 10 cd/m2, etc. to perform spectral characterization on the 21 kinds of microcrystalline glass panels in the example, and transmission spectral power $\varphi_i(\lambda)$ of the microcrystalline glass panels is obtained, where i=1, 2, 3,..., 21, as shown in FIG. 2.

Chromaticity coordinates corresponding to the known microcrystalline glass panels are obtained by applying Equations (1-1) to (1-7) according to calculation manners in the above standards, and the chromaticity coordinates are in a chromaticity region W1.

Visible light transmittances and chromaticity coordinates of the 21 kinds of microcrystalline glass panels are shown in Table 4.

| i | Visible light transmittance | Color coordinates $x_i$ | Color coordinates $y_i$ |
|---|---|---|---|
| 1 | 6.71 | 0.5816 | 0.4005 |
| 2 | 0.69 | 0.6487 | 0.3378 |
| 3 | 1.35 | 0.6466 | 0.3478 |
| 4 | 0.85 | 0.6343 | 0.3585 |
| 5 | 3.69 | 0.6118 | 0.3808 |
| 6 | 1.34 | 0.6537 | 0.342 |
| 7 | 0.98 | 0.5854 | 0.4014 |
| 8 | 0.67 | 0.6801 | 0.3118 |
| 9 | 1.00 | 0.4092 | 0.3395 |
| 1 0 | 1.73 | 0.3566 | 0.3413 |
| 1 1 | 0.80 | 0.5927 | 0.3214 |

Table 4 Visible light transmittances and chromaticity coordinates of 21 kinds of microcrystalline glass panels

| 1 2 | 0.22 | 0.6343 | 0.3355 |
| 1 3 | 2.47 | 0.5973 | 0.3463 |
| 1 4 | 1.47 | 0.5791 | 0.3383 |
| 1 5 | 0.74 | 0.6564 | 0.3409 |
| 1 6 | 0.34 | 0.32 | 0.28 |
| 1 7 | 0.09 | 0.651 | 0.2899 |
| 1 8 | 3.08 | 0.5843 | 0.3458 |
| 1 9 | 0.95 | 0.64 | 0.3531 |
| 2 0 | 0.34 | 0.6017 | 0.2286 |
| 2 1 | 0.46 | 0.6651 | 0.2595 |

It is given that a chromaticity coordinate region of the microcrystalline glass panel is W1, and optical parameters of the light source are adjusted such that the light emitted by the light source transmits through the display surface of the microcrystalline glass panel and generates a light effect in a white chromaticity coordinate region W2.

A white tolerance of the display surface of the microcrystalline glass panel through which the light emitted by the light source transmits is between 0 and 1.5. CIE whiteness equations (3-1) to (3-4) are used, where W denotes the whiteness, $T_W$ denotes a light-tone index, Y denotes the stimulus value of the displaying white light, x and y denote chromaticity coordinates of the displayed white light, and $x_n$ and $y_n$ denote chromaticity coordinates of a fully diffuse reflector, which are 0.31006 and 0.31615, respectively:

$$W = Y + 800(x_n - x) + 1700(y_n - y) \quad (3-1)$$

$$T_W = 1000(x_n - x) - 650(y_n - y) \quad (3-2)$$

$$40 < W < 5Y - 280 \quad (3-3)$$

$$-4 < T_W < 2 \quad (3-4)$$

A color temperature *Tc* is calculated by equation (3-1) and equation (3-2):

$$A_c = \frac{x - 0.329}{y - 0.187} \quad (3-1)$$

$$T_C = 669A_c^4 - 779A_c^3 + 3660A_c^2 - 7047A_c^2 + 5652 \quad (3-2)$$

wherein *Ac* denotes a reciprocal of a straight slope of an isochromatic temperature line *Tc*. The white chromaticity coordinate region W2 is obtained, and the light effect produced by the light emitted by the light source and transmitting through the display surface of the microcrystalline glass panel is in the white chromaticity coordinate region W2, which may be determined by coordinates in the following Table 5:

Table 5 Chromaticity regions of the white light color rendering device

| Color temperature | Chromaticity coordinate x | Chromaticity coordinate y |
|---|---|---|
| 4200 | 0.40 | 0.49 |
| 4950 | 0.36 | 0.49 |
| 6030 | 0.31 | 0.49 |
| 7150 | 0.27 | 0.47 |
| 9000 | 0.23 | 0.43 |
| 12570 | 0.19 | 0.39 |
| 21270 | 0.17 | 0.34 |
| ∞ | 0.15 | 0.29 |
| ∞ | 0.13 | 0.23 |
| ∞ | 0.13 | 0.19 |
| ∞ | 0.14 | 0.15 |
| ∞ | 0.17 | 0.12 |
| ∞ | 0.21 | 0.13 |
| ∞ | 0.26 | 0.16 |
| ∞ | 0.30 | 0.18 |
| 11730 | 0.33 | 0.19 |
| 2220 | 0.37 | 0.22 |
| 1810 | 0.42 | 0.25 |
| 1670 | 0.48 | 0.29 |
| 1670 | 0.51 | 0.33 |
| 1780 | 0.53 | 0.38 |
| 1880 | 0.54 | 0.41 |
| 2430 | 0.50 | 0.44 |
| 3130 | 0.46 | 0.47 |

where a center position of the white chromaticity coordinate region W2 is a chromaticity point of isoenergetic white light with coordinates (0.3333, 0.3333).

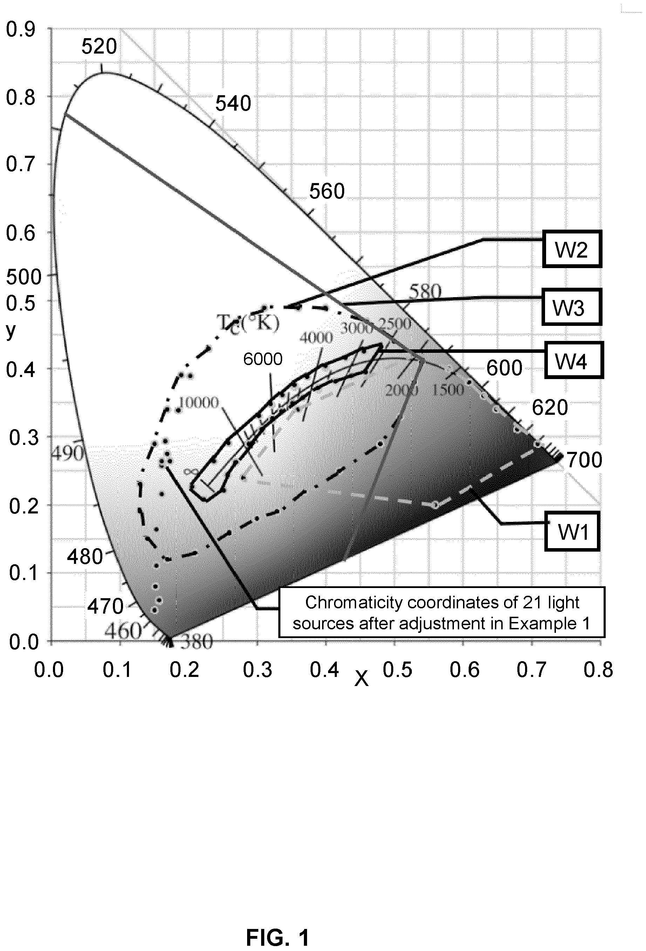

According to the American National Standard ANSI NEMA ANSLG C78.377-2008 (Specifications for the Chromaticity of Solid State Lighting Products), a chromaticity coordinate region W4 of optimal white color rendering, with a white color temperature from 2700k to ∞, is selected from the above white chromaticity coordinate region W2, as shown in Table 6, and a corresponding white chromaticity coordinate region map thereof is as shown in FIG. 1.

Table 6 Chromaticity coordinate region of optimal color rendering for the white light color rendering device

| Color temperature | | Chromaticity coordinates | |
|---|---|---|---|
| | | x | y |
| 2700K | Center value | 0.4578 | 0.4101 |
| | Tolerance | 0.4813 | 0.4319 |
| | | 0.4562 | 0.4260 |
| | | 0.4373 | 0.3893 |
| | | 0.4593 | 0.3944 |
| 3000K | Center value | 0.4338 | 0.4030 |
| | Tolerance | 0.4562 | 0.4260 |
| | | 0.4299 | 0.4165 |
| | | 0.4147 | 0.3814 |
| | | 0.4373 | 0.3893 |
| 3500K | Center value | 0.4073 | 0.3917 |
| | Tolerance | 0.4299 | 0.4165 |
| | | 0.3996 | 0.4015 |
| | | 0.3889 | 0.3690 |
| | | 0.4147 | 0.3814 |
| 4000K | Center value | 0.3818 | 0.3797 |
| | Tolerance | 0.4006 | 0.4044 |
| | | 0.3736 | 0.3874 |
| | | 0.3670 | 0.3578 |
| | | 0.3898 | 0.3716 |
| 4500K | Center value | 0.3611 | 0.3658 |
| | Tolerance | 0.3736 | 0.3874 |
| | | 0.3548 | 0.3736 |
| | | 0.3512 | 0.3465 |
| | | 0.3670 | 0.3578 |
| 5000K | Center value | 0.3447 | 0.3553 |
| | Tolerance | 0.3551 | 0.3760 |
| | | 0.3376 | 0.3616 |
| | | 0.3366 | 0.3369 |
| | | 0.3515 | 0.3487 |
| 5700K | Center value | 0.3287 | 0.3417 |
| | Tolerance | 0.3376 | 0.3616 |
| | | 0.3207 | 0.3462 |
| | | 0.3222 | 0.3243 |
| | | 0.3366 | 0.3369 |

(continued)

| Color temperature | | Chromaticity coordinates | |
|---|---|---|---|
| | | x | y |
| 6500K | Center value | 0.3123 | 0.3282 |
| | Tolerance | 0.3205 | 0.3481 |
| | | 0.3028 | 0.3304 |
| | | 0.3068 | 0.3113 |
| | | 0.3221 | 0.3261 |
| 6500K-∞ | Tolerance | 0.2886 | 0.2887 |
| | | 0.2696 | 0.2629 |
| | | 0.2576 | 0.2439 |
| | | 0.2524 | 0.2215 |
| | | 0.2231 | 0.2078 |
| | | 0.2593 | 0.2905 |
| | | 0.2369 | 0.2646 |
| | | 0.2059 | 0.2267 |

Based on the chromaticity coordinate region W4 of optimal white color rendering and the intrinsic chromaticity coordinate value of the glass, the chromaticity coordinate range of the LED is obtained as shown in FIG. 1 and as shown in Table 7.

Table 7 Chromaticity coordinates of 21 kinds of LED

| i | Chromaticity coordinates $x_i$ | Chromaticity coordinates $y_i$ |
|---|---|---|
| 1 | 0.1506 | 0.0450 |
| 2 | 0.1508 | 0.0449 |
| 3 | 0.1508 | 0.0794 |
| 4 | 0.1524 | 0.0794 |
| 5 | 0.1534 | 0.1106 |
| 6 | 0.1538 | 0.1634 |
| 7 | 0.1572 | 0.0593 |
| 8 | 0.1607 | 0.2643 |
| 9 | 0.1610 | 0.2578 |
| 10 | 0.1610 | 0.2578 |
| 11 | 0.1618 | 0.2157 |
| 12 | 0.1631 | 0.2576 |
| 13 | 0.1661 | 0.2932 |
| 14 | 0.1661 | 0.2932 |
| 15 | 0.1662 | 0.2568 |
| 16 | 0.1699 | 0.2742 |
| 17 | 0.1738 | 0.2637 |
| 18 | 0.1856 | 0.3393 |

(continued)

| i | Chromaticity coordinates $x_i$ | Chromaticity coordinates $y_i$ |
|---|---|---|
| 19 | 0.1856 | 0.3393 |
| 20 | 0.1822 | 0.3047 |
| 21 | 0.2027 | 0.3897 |

Chromaticity coordinates of the microcrystalline glass panel are selected in the chromaticity coordinate region W1 corresponding to the microcrystalline glass panel, and the chromaticity coordinates are tangent with the white chromaticity region W2 to obtain a maximal intersecting region range W3, that is, a chromaticity coordinate range of the light color adjustment of the light source.

A white color with a certain color difference is obtained by using a dominant wavelength or a complementary color wavelength to perform color complementary in a chromaticity ring. The intrinsic chromaticity coordinate of the light source is corrected by a light source controller to be within the maximum intersecting region range W3 such that the light effect produced by the light source transmitting through the display surface of the microcrystalline glass panel is in a required specified white chromaticity coordinate region W2.

A light source is selected in the maximal intersecting region range W3, and the chromaticity coordinate of the light source is measured. The chromaticity coordinate may make the light effect produced by the light source transmitting through the display surface of the microcrystalline glass panel in the required specified white chromaticity coordinate region W2.

In addition, preferably, any point in the chromaticity region W1 corresponding to the microcrystalline glass panel is selected or the chromaticity coordinates of the microcrystalline glass panel are selected to be connected to an isoenergetic white light point (0.333, 0.333) in a chromaticity coordinate map and make an extension line. A dominant wavelength of a spectral color at any point (except the isoenergetic white light point) on a connection line from an intersection of the extension line and the spectral trace line to the isoenergetic white light point (0.333, 0.333) is a dominant wavelength of a standard white light complementary color of the light source.

The chromaticity coordinate of the light source is selected on the connection line from the intersection of the extension line and the spectral trace line to the isoenergetic white light point (0.333,0.333), and the optical parameters of the selected light source are adjusted. Thus, the light emitted by the light source may transmit through the display surface of the microcrystalline glass panel and display a white light having a specified white chromaticity coordinate on the display surface.

## Example 2

The embodiment changes a light intensity ratio of RGBA trichromatic lamp beads, thereby changing a color position when the device renders the color such that the light emitted by four intrinsic peak light sources may transmit through the display surface of the microcrystalline glass panel and display a white light on the display surface.

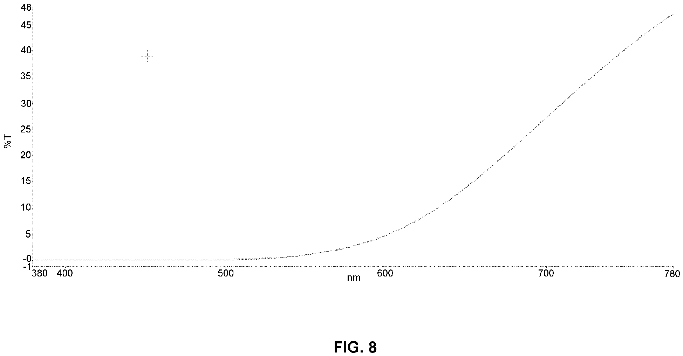

In example 2, a white light color rendering device based on a microcrystalline glass panel and an RGBA tetrachromatic LED light source is provided. The light emitted by the RGBA tetrachromatic LED light source transmits through the microcrystalline glass panel and a white light is displayed by adjusting a light intensity ratio of the RGBA tetrachromatic LED light source. The device includes a microcrystalline glass panel and a light source composed of RGBA tetrachromatic LED lamp beads. The microcrystalline glass panel has a display surface, and the light source is located on the side of a non-display surface of the microcrystalline glass panel. A spectrum of the light source under equal power is shown in FIG. 8, and the chromaticity coordinates thereof are (0.2941, 0.2363).

The spectrum of the light source has four intrinsic peaks, each of which corresponds to a light-emitting lamp bead, where a characteristic peak of a red R lamp bead (a dominant wavelength) is 628 nm, a full width at half maxima thereof is within a range of 618 nm-637 nm, a total covering range thereof is 19 nm, and a color position corresponding to a maximum light intensity thereof is (0.6852, 0.3088). A characteristic peak of a green G lamp bead (the dominant wavelength) is 520 nm, a full width at half maxima thereof is within a range of 504 nm-540 nm, a total covering range thereof is 36 nm, and a color position corresponding to a maximum light intensity thereof is (0.1783, 0.7207). A characteristic peak of a blue B lamp bead (the dominant wavelength) is 460 nm, a full width at half maxima thereof is within a range of 450 nm-472 nm, a total covering range thereof is 22 nm, and a color position corresponding to a maximum light intensity thereof is (0.1410, 0.0491). A characteristic peak of an amber A lamp bead (the dominant wavelength) is 592 nm, a full width at half maxima thereof is within a range of 581 nm-602 nm, a total covering range thereof is 21 nm, and a color position corresponding to a maximum light intensity thereof is (0.5719, 0.4215). A color gamut of the RGBA light source is shown in Table 8:

Table 8 Color gamut of RGBA tetrachromatic LED light source

| Bead Color | Chromaticity coordinate x | Chromaticity coordinate y |
|---|---|---|
| Red R | 0.6852 | 0.3088 |
| Green G | 0.1783 | 0.7207 |
| Blue B | 0.1410 | 0.0491 |
| Amber A | 0.5719 | 0.4215 |

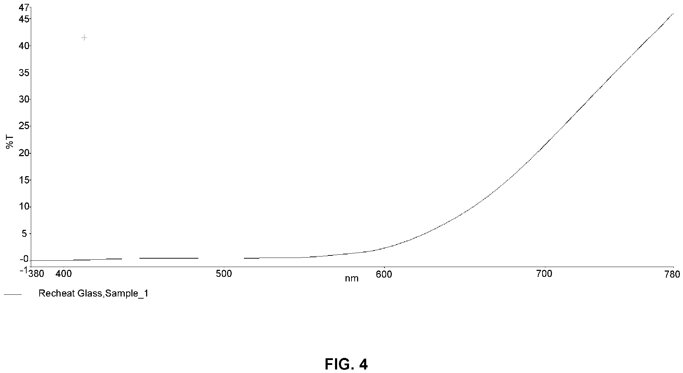

A thickness of the microcrystalline glass panel is 4 mm, in a form of a thin layer. An average transmittance is 1.47% within a visible spectral range of 380 nm-780 nm, and a spectrum thereof is shown in FIG. 4. The chromaticity coordinates of the microcrystalline glass panel are (0.5791, 0.3383), which are within the microcrystalline glass panel chromaticity region W1.

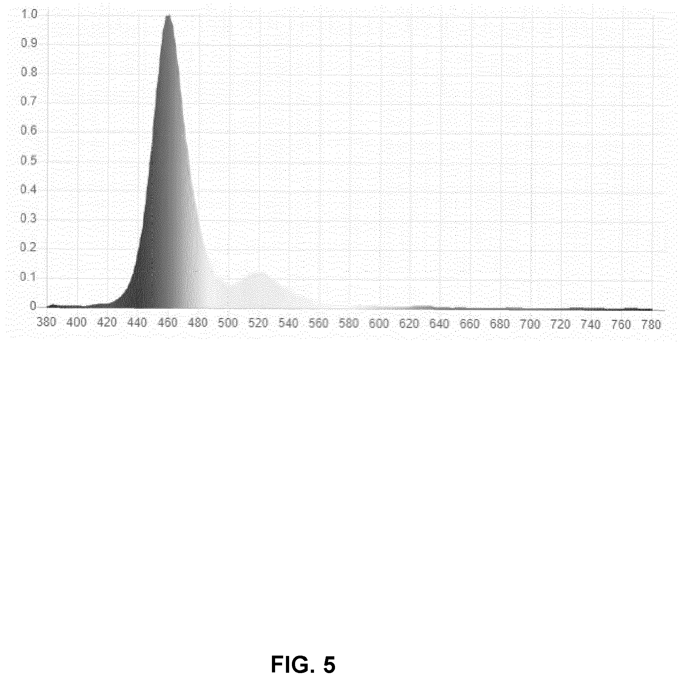

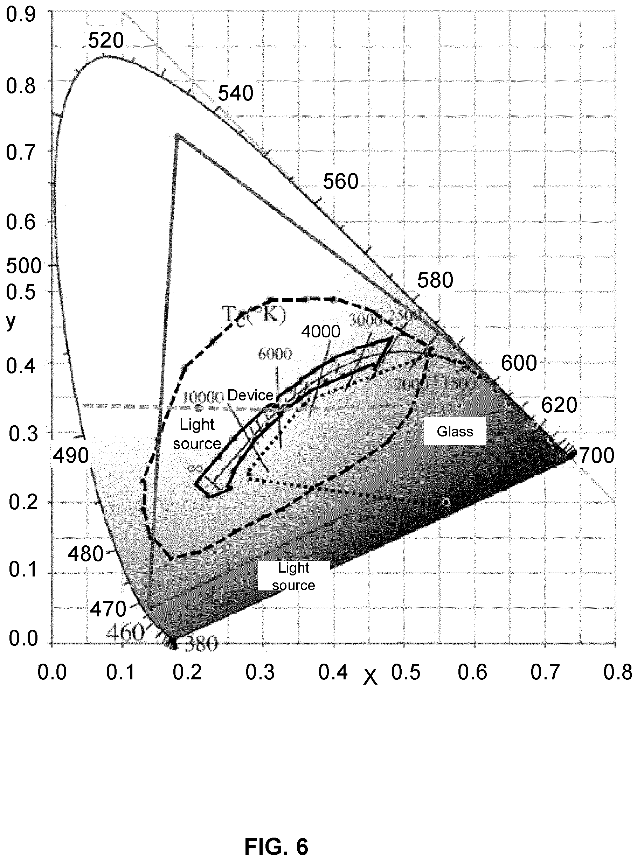

At equal power, the chromaticity coordinates of the light source after transmitting through a display surface of a microcrystalline glass panel are (0.5045, 0.2989), wherein the light source displays pink color rather than white color. According to the equations of a light color adjustment technique in example 1, the chromaticity coordinates of the light source are (0.2236, 0.3391). An intensity ratio of lamp beads is changed, at this time the spectrum of the light source is as shown in FIG. 5, the light emitted by the light source and transmitting through the microcrystalline glass panel is displayed in white, and the chromaticity coordinates of the transmitted light are (0.3077, 0.3248). FIG. 6 shows the distribution of the chromaticity coordinates of the light source, the microcrystalline glass panel, and the white light color rendering device when the white light color rendering device is rendering white color. It may be seen from the figure that a white light displayed by the device is located within the optimal white region W4 in example 1, the microcrystalline glass panel is located within the region W1, and the tetrachromatic LED light source is located within W3.

In addition, preferably, the chromaticity coordinates (0.5791, 0.3383) of the microcrystalline glass panel are connected to an isoenergetic white light point (0.333,0.333) in a chromaticity coordinate map and make an extension line. A dominant wavelength of a spectral color at any point (except the isoenergetic white light point) on a connection line from an intersection of the extension line and the spectral trace line to the isoenergetic white light point (0.333, 0.333) is a dominant wavelength of a standard white light complementary color of the light source.

Chromaticity coordinates of the light source are selected at any point on the connection line from the intersection of the extension line and the spectral trace line to the isoenergetic white light point (0.333, 0.333). By adjusting the optical parameters of the light source, the chromaticity coordinates of the light source are adjusted to (0.2236, 0.3391), so that the light emitted by the light source transmits the display surface of the microcrystalline glass panel having white chromaticity coordinates (0.5791, 0.3383) and displays a white light with specified white chromaticity coordinates (0.3077, 0.3248).

**Example 3**

The embodiment changes a light intensity ratio of RGBA trichromatic lamp beads, thereby changing a color position when the device rendered the color such that a light emitted by a three intrinsic peak light source transmits through a display surface of a microcrystalline glass panel and displays a white light on the display surface.

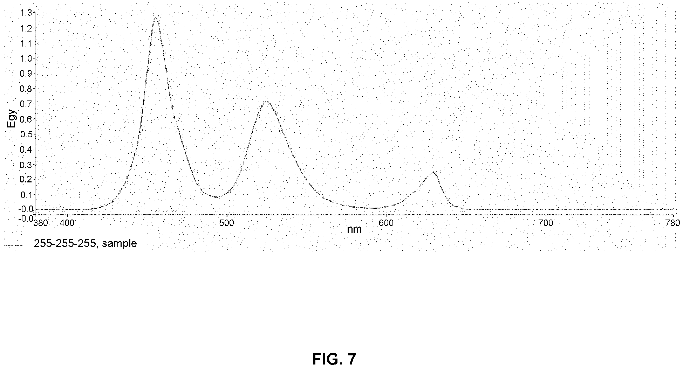

In example 3, a white light color rendering device based on a microcrystalline glass panel and an RGB trichromatic LED light source is provided. The light emitted by the RGB trichromatic LED light source transmits through the microcrystalline glass panel and displays a white light by adjusting a light intensity ratio of the RGB trichromatic LED light source. The device includes a microcrystalline glass panel and a light source composed of RGB trichromatic LED lamp beads. The microcrystalline glass panel has a display surface, and the light source is located on a side of a non-display surface of the microcrystalline glass panel. A spectrum of the light source under equal power is shown in FIG. 7, and the chromaticity coordinates thereof are (0.1874, 0.2516).

The spectrum of the light source used has three intrinsic peaks, each of which corresponds to a light-emitting lamp bead, where a characteristic peak of a red R lamp bead (a dominant wavelength) is 625 nm, a full width at half maxima thereof is within a range of 617 nm-632 nm, a total covering range thereof is 15 nm, and a color position corresponding to a maximum light intensity thereof is (0.6682, 0.3119). A characteristic peak of a green G lamp bead (the dominant wavelength) is 525 nm, a full width at half maxima thereof is within a range of 493 nm-542 nm, a total covering range thereof is 39 nm, and a color position corresponding to a maximum light intensity thereof is (0.1777, 0.7468). A characteristic peak of a blue B lamp bead (the dominant wavelength) is 455 nm, a full width at half maxima thereof is within a range of 448 nm-465 nm, a total covering range thereof is 17 nm, and a color position corresponding to a maximum light intensity thereof is (0.1474, 0.0351). A color gamut of RGB light source is shown in Table 9:

Table 9 Color gamut of the RGB trichromatic light source

| Bead Color | Chromaticity coordinate x | Chromaticity coordinate y |
|---|---|---|
| Red R | 0.6682 | 0.3119 |
| Green G | 0.1777 | 0.7468 |
| Blue B | 0.1474 | 0.0351 |

The thickness of the microcrystalline glass panel is 4.27 mm, in a form of a thin layer. An average transmittance is 2.451% within a visible spectral range of 380 nm-780 nm, and a spectrum thereof is shown in FIG. 8. The chromaticity coordinates of the microcrystalline glass panel are (0.5793, 0.3463), which are within the microcrystalline glass panel chromaticity region W1.

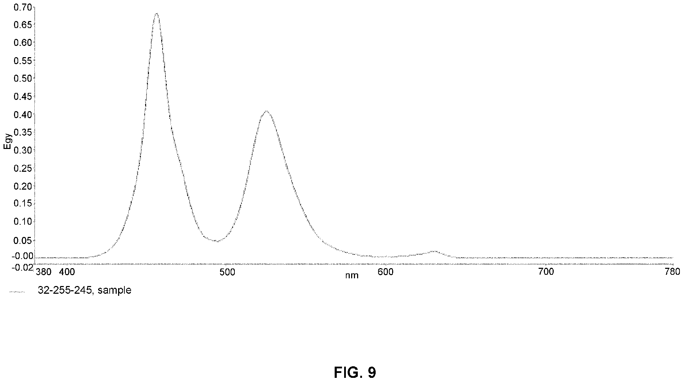

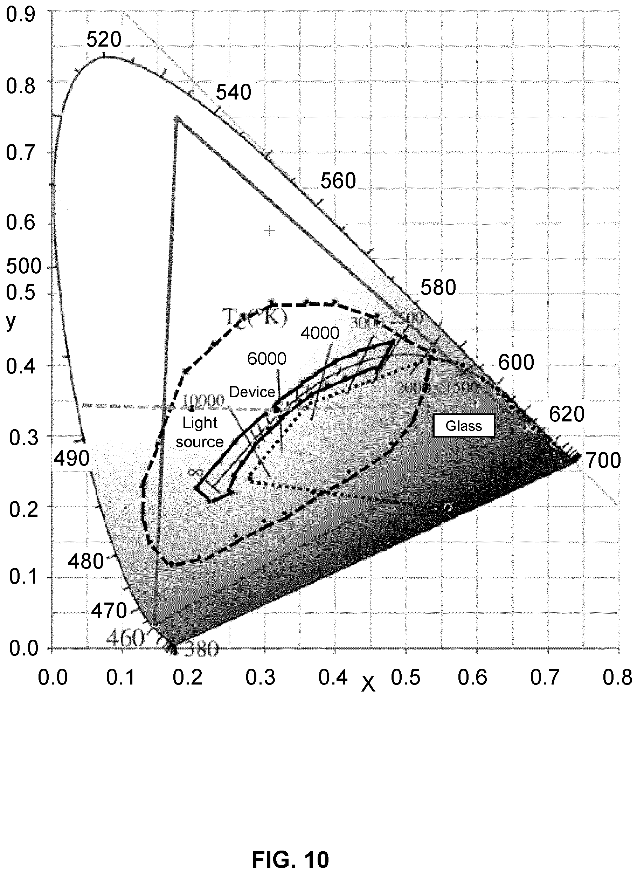

At equal intensity, the chromaticity coordinates of a light source after transmitting through a display surface of a microcrystalline glass panel are (0.6057, 0.3484), wherein the light source displays an orange-red color. According to the equations of a light color adjustment technique in example 1, the chromaticity coordinates of the light source are (0.2245, 0.3412). An intensity ratio of the light source is changed, at this time the spectrum of the light source is as shown in FIG. 9, the light emitted by the light source transmits through the microcrystalline glass panel and is displayed in white, and the chromaticity coordinates of the transmitted light are (0.3248, 0.3315). FIG. 10 shows the distribution of the chromaticity coordinates of the light source, the microcrystalline glass panel, and the white light color rendering device when the white light color rendering device is rendering white color. It may be seen from the figure that a white light displayed by the device is located within an optimal white region W4 in example 1, the microcrystalline glass panel is located within the region W1, and the trichromatic LED light source is located within W3.

In addition, preferably, the chromaticity coordinates (0.5793, 0.3463) of the microcrystalline glass panel are connected to an isoenergetic white light point (0.333,0.333) in a chromaticity coordinate map and make an extension line. A dominant wavelength of a spectral color at any point (except the isoenergetic white light point) on a connection line from an intersection of the extension line and the spectral trace line to the isoenergetic white light point (0.333, 0.333) is a dominant wavelength of a standard white light complementary color of the light source.

Chromaticity coordinates of the light source are selected at any point on the connection line from the intersection of the extension line and a spectral trace line to the isoenergetic white light point (0.333, 0.333). By adjusting the optical parameters of the light source, the chromaticity coordinates of the light source are adjusted to (0.2245, 0.3412), so that the light emitted by the light source transmits through the display surface of the microcrystalline glass panel having white chromaticity coordinates (0.5973, 0.3463) and display a white light with specified white chromaticity coordinates (0.3248, 0.3315).

## Example 4

The embodiment changes a spectral range of a blue LED after being doped with a phosphor, thereby changing a color position when the device renders the color such that the light emitted by a two intrinsic peak light source transmits through the display surface of the microcrystalline glass panel and display a white light on the display surface.

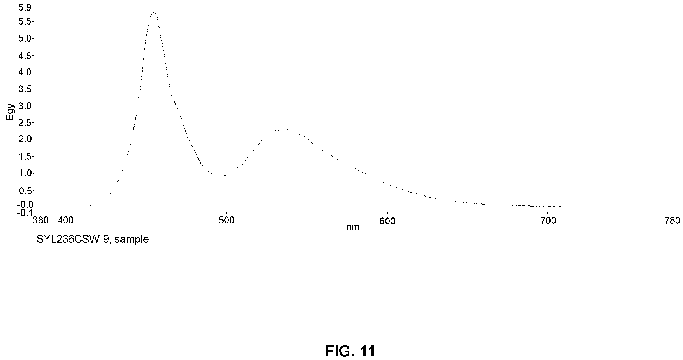

In example 4, a white light color rendering device based on a microcrystalline glass panel and a dichromatic LED light source is provided. The light emitted by the dichromatic LED light source transmits through the microcrystalline glass panel and displays a white light by adjusting the concentration of a B+ phosphor. The device includes the microcrystalline glass panel and a light source composed of blue LED lamp beads added with phosphor. The microcrystalline glass panel has a display surface, and the light source is located on a side of a non-display surface of the microcrystalline glass panel. A spectrum of the light source after being added with yttrium aluminum garnet (YAG: Ce3+) phosphor is shown in FIG. 11, and chromaticity coordinates thereof are (0.2279, 0.2760), and white light is displayed.

The spectrum of the light source has two intrinsic peaks, one of which corresponds to a light-emitting lamp bead, and another of which corresponds to a fluorescent material, where the light-emitting lamp is a blue LED lamp bead. A characteristic peak (a dominant wavelength) of the blue LED lamp bead is 458 nm, a full width at half maxima thereof is within a range of 453 nm-481 nm, and a total covering range thereof is 28 nm. A characteristic peak (the dominant wavelength) of an emitted fluorescent light is 535 nm, a full width at half maxima thereof is within a range of 505 nm-580 nm, and a total covering range thereof is 75 nm.

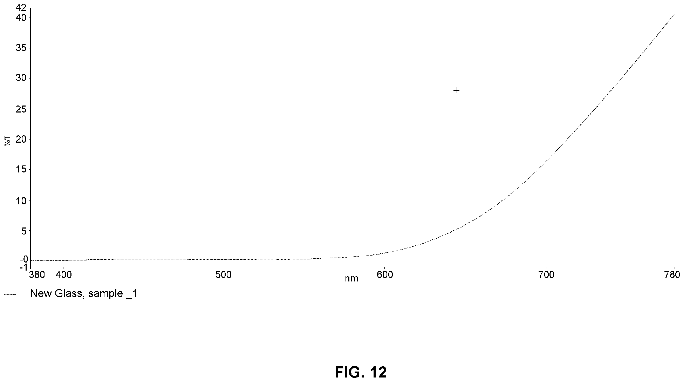

The thickness of the microcrystalline glass panel used is 3.95 mm, in the form of a thin layer. An average transmittance is 0.8% within a visible spectral range of 380 nm-780 nm, and a spectrum thereof is shown in FIG. 12. The chromaticity coordinates of the microcrystalline glass panel are (0.5927, 0.3214), which are within the microcrystalline glass panel chromaticity region W1.

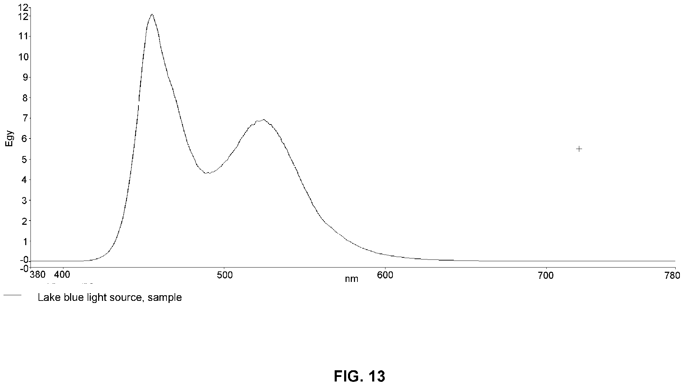

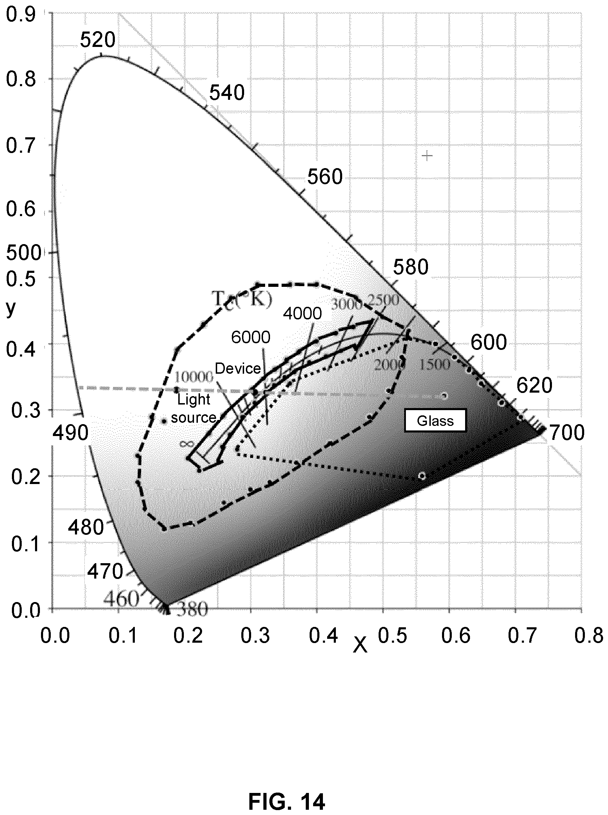

The chromaticity coordinates of a light source used after transmitting through a display surface of a microcrystalline glass panel are (0.2279, 0.2260), wherein the light source displays a blue color. According to the equations of a light color adjustment technique in example 1, the chromaticity coordinates of the light source are (0.2176, 0.3405). A concentration of the phosphor doped in the sol that encapsulates the lamp bead is changed, at this time the spectrum of the light source is as shown in FIG. 13, the light emitted by the light source transmits through the microcrystalline glass panel and is displayed in white, and the chromaticity coordinates of the transmitted light are (0.3262, 0.3311). FIG. 14 shows the distribution of the chromaticity coordinates of the light source, the microcrystalline glass panel, and the white light color rendering device when the white light color rendering device is rendering white color. It may be seen from the figure that a white light displayed by the device is located within an optimal white region W4 in example 1, the microcrystalline glass panel is located within the region W1, and the tetrachromatic LED light source is located within W3.

In addition, preferably, the chromaticity coordinates (0.5927, 0.3214) of the microcrystalline glass panel are connected to an isoenergetic white light point (0.333,0.333) in a chromaticity coordinate map and make an extension line. A dominant wavelength of a spectral color at any point (except the isoenergetic white light point) on a connection line from an intersection of the extension line and the spectral trace line to the isoenergetic white light point (0.333, 0.333) is a dominant wavelength of a standard white light complementary color of the light source.

Chromaticity coordinates of the light source are selected at any point on the connection line from the intersection of the extension line and a spectral trace line to the isoenergetic white light point (0.333, 0.333). By adjusting the optical parameters of the light source, the chromaticity coordinates of the light source are adjusted to (0.2176, 0.3405), so that the light emitted by the light source transmits through the display surface of the microcrystalline glass panel having white chromaticity coordinates (0.5927,0.3214) and display a white light with specified white chromaticity coordinates (0.3262,0.3311).

**Contrasting example:**

A microcrystalline glass panel with i=21 is selected, by comparing an LED spectrum with that in the CN patent No. 103250004B in which a filter film is added, the transmittance spectrums of the microcrystalline glass panel before and after applying the filter compensator are shown in FIG. 20. It may be seen from the figure that adding a filter film or a compensator reduces a transmittance of the microcrystalline glass panel, making the microcrystalline glass panel maintain essentially the same transmittance of red, green, and blue bands in the white light so that an LED light source composed of the RGB trichromatic beads still maintains the original color after transmitting through the microcrystalline glass panel. While the present disclosure realizes a white light display by adjusting the light color of the light source, the transmittance of the microcrystalline glass panel is reduced, and no object is added to the light source and the display panel. Both of the two (i.e., adding a filter film or a compensator, and adjusting the light color of the light source) ultimately display white light, but the chromaticity of the light source used is different.

In particular, the light color rendering device and the method for adjusting the light are particularly applicable to the white color rendering of the microcrystalline glass stove panel. The microcrystalline glass with a relatively small transmittance is selected, and the transmittance is particularly preferred to be within a range of 0.2-3%. Without a need for additional shading ink, filter compensator, etc., an intensity and spectral efficiency of the light source are maximized, and light power through the microcrystalline glass is enhanced to make the microcrystalline glass display a white light with a strong intensity so that components on a side of a non-display surface is or not easy to be seen.

**Claims**

1. A white light color rendering device based on a microcrystalline glass panel, comprising a microcrystalline glass panel and a light source, wherein the microcrystalline glass panel includes a display surface, the light source is located on a side of a non-display surface of the microcrystalline glass panel, the light source displays white light on the display surface of the microcrystalline glass panel, a chromaticity coordinate region W1 presented by a transmitted light of a CIE standard illuminant through the microcrystalline glass panel in a CIE standard chromaticity system is determined by following coordinates:

| x | y |
| --- | --- |
| 0.68 | 0.31 |
| 0.71 | 0.29 |
| 0.65 | 0.34 |

(continued)

| x | y |
|---|---|
| 0.63 | 0.36 |
| 0.61 | 0.38 |
| 0.56 | 0.2 |
| 0.58 | 0.4 |
| 0.54 | 0.42 |
| 0.36 | 0.34 |
| 0.28 | 0.24 |

the light source transmits light through the microcrystalline glass panel to display the white light, and a white chromaticity coordinate region W2 is obtained according to a CIE whiteness equation and a color tolerance equation, which is determined by following coordinates:

| Color temperature | Chromaticity coordinate x | Chromaticity coordinate y |
|---|---|---|
| 4200 | 0.40 | 0.49 |
| 4950 | 0.36 | 0.49 |
| 6030 | 0.31 | 0.49 |
| 7150 | 0.27 | 0.47 |
| 9000 | 0.23 | 0.43 |
| 12570 | 0.19 | 0.39 |
| 21270 | 0.17 | 0.34 |
| $\infty$ | 0.15 | 0.29 |
| $\infty$ | 0.13 | 0.23 |
| $\infty$ | 0.13 | 0.19 |
| $\infty$ | 0.14 | 0.15 |
| $\infty$ | 0.17 | 0.12 |
| $\infty$ | 0.21 | 0.13 |
| $\infty$ | 0.26 | 0.16 |
| $\infty$ | 0.30 | 0.18 |
| 11730 | 0.33 | 0.19 |
| 2220 | 0.37 | 0.22 |
| 1810 | 0.42 | 0.25 |
| 1670 | 0.48 | 0.29 |
| 1670 | 0.51 | 0.33 |
| 1780 | 0.53 | 0.38 |
| 1880 | 0.54 | 0.41 |
| 2430 | 0.50 | 0.44 |
| 3130 | 0.46 | 0.47 |

2. The white light color rendering device of claim 1, wherein the microcrystalline glass panel has an average transmittance of not larger than 7% within a visible spectrum range of 380 nm-780 nm.

3. The white light color rendering device of claim 1, wherein a spectrum of the light source has 1-4 intrinsic peaks.

4. The white light color rendering device of any one of claims 1-3, wherein the light source constitutes a light-emitting component including one of an LED component, a fluorescent component, and a quantum dot component.

5. A light color adjusting method for the white light color rendering device of any one of claims 1-4, wherein the method comprises:
adjusting optical parameters of the light source to adjust a spectral coverage range so that a light emitted by the light source transmits through the microcrystalline glass panel and displays a white light in the white chromaticity coordinate region W2, wherein the optical parameters include an intensity and a full width of a main wavelength spectrum.

6. The light color adjusting method of claim 5, wherein the method is implemented based on a law of complementary colors of Grassman's color mixing theory, comprising:

(1) obtaining a transmittance function $\varphi_i(\lambda)$ of the microcrystalline glass panel in a photometric, wherein i denotes a serial number of the microcrystalline glass panel, and obtaining a chromaticity region W1 corresponding to the microcrystalline glass panel based on a stimulus equation and a color matching function of the CIE standard chromaticity system;

$$X_i = k \sum_{380}^{780} \varphi_i(\lambda)\bar{x}(\lambda)\Delta\lambda \quad (1-1)$$

$$Y_i = k \sum_{380}^{780} \varphi_i(\lambda)\bar{y}(\lambda)\Delta\lambda \quad (1-2)$$

$$Z_i = k \sum_{380}^{780} \varphi_i(\lambda)\bar{z}(\lambda)\Delta\lambda \quad (1-3)$$

$$k = \frac{100}{\sum_{380}^{780} \varphi_i(\lambda)\bar{y}(\lambda)\Delta\lambda} \quad (1-4)$$

$$x_i = \frac{X_i}{X_i + Y_i + Z_i} \quad (1-5)$$

$$y_i = \frac{Y_i}{X_i + Y_i + Z_i} \quad (1-6)$$

$$z_i = \frac{Z_i}{X_i + Y_i + Z_i} \quad (1-7)$$

wherein $X_i$, $Y_i$, and $Z_i$ denote tri-stimulus values of the microcrystalline glass panel, $x_i$, $y_i$, and $z_i$ denote chromaticity coordinates of the microcrystalline glass panel, $\bar{x}(\lambda)$, $\bar{y}(\lambda)$, and $\bar{z}(\lambda)$ denote functions of the tri-stimulus values in a CIE1931 standard chromaticity observing system, $\Delta\lambda$ denotes a wavelength spacing, and $\lambda$ denotes a wavelength;

for any microcrystalline glass panel chromaticity coordinate in the chromaticity region W1 corresponding to the microcrystalline glass panel, making a tangent line to the white chromaticity coordinate region W2 through the microcrystalline glass panel chromaticity coordinate, wherein a region surrounded by the tangent line and a spectral trace line is a light color adjustment range W3 of the light source of the white light color rendering device;

(2) selecting a white chromaticity coordinate point (u, v) in the white chromaticity coordinate region W2, wherein the chromaticity coordinates of the microcrystalline glass panel are given as $(x_i, y_i)$, and obtaining target chromaticity coordinates $(m_i, n_i)$ of the light source according to Equations 2-1 to 2-2:

$$u = \frac{1}{2} \sum_{380}^{780} \frac{x_i''(\lambda) m_i''(\lambda)}{\bar{x}'(\lambda)} \Delta\lambda \quad (2-1)$$

$$v = \frac{1}{2} \sum_{380}^{780} \frac{y_i''(\lambda) n_i''(\lambda)}{\bar{y}'(\lambda)} \Delta\lambda \quad (2-2)$$

wherein $x_i''(\lambda)$ and $y_i''(\lambda)$ denote second-order derivatives of a chromaticity-wavelength function of the microcrystalline glass relative to $\lambda$, respectively, $n_i''(\lambda)$ and $m_i''(\lambda)$ denote second-order derivatives of a chromaticity -wavelength function of the light source relative to $\lambda$, respectively, and $\bar{x}'(\lambda)$ and $\bar{y}'(\lambda)$ denote first-order derivatives of a color matching function in the CIE 1931 standard chromaticity observing system relative to $\lambda$, respectively; and

(3) selecting a light source with chromaticity coordinates of $(m_i, n_i)$ in W3, or adjusting chromaticity coordinates of the light source to $(m_i, n_i)$ by adjusting the optical parameters of the light source, such that a light emitted by the light source transmits through a display surface of the microcrystalline glass panel having chromaticity coordinates of $(x_i, y_i)$ and displays a white light in the white chromaticity coordinate region W2, or displays a white light having white chromaticity coordinates of (u, v).

7. The light color adjusting method of claim 6, wherein the method also comprises:

selecting any point in the chromaticity region W1 corresponding to the microcrystalline glass panel or selecting a point having the chromaticity coordinates of $(x_i, y_i)$ of the microcrystalline glass panel, connecting the any point in the chromaticity region W1 or the point having the chromaticity coordinates of $(x_i, y_i)$ to an isoenergetic white light point (0.333, 0.333) in a chromaticity coordinate map and making an extension line, wherein a dominant wavelength of a spectral color at any point (except the isoenergetic white light point) on a connection line from an intersection of the extension line and a spectral trace line to the isoenergetic white light point (0.333, 0.333) is a dominant wavelength of a standard white light complementary color of the light source; and
selecting a light source having chromaticity coordinates of $(m_i, n_i)$ on the connection line from the intersection of the extension line and the spectral trace line to the isoenergetic white light point (0.333, 0.333), or adjusting the optical parameters of the light source to adjust the chromaticity coordinates of the light source to $(m_i, n_i)$ such that the light emitted by the light source transmits through the display surface of the microcrystalline glass panel having the white chromaticity coordinates of $(x_i, y_i)$ and displays a white light with the white chromaticity coordinates of (u, v).

FIG. 1

**FIG. 2**

**FIG. 3**

**FIG. 4**

**FIG. 5**

FIG. 6

**FIG. 7**

**FIG. 8**

FIG. 9

FIG. 10

**FIG. 11**

**FIG. 12**

Lake blue light source, sample

**FIG. 13**

FIG. 14

FIG. 15

## INTERNATIONAL SEARCH REPORT

| International application No. |
|---|
| **PCT/CN2022/138841** |

**A. CLASSIFICATION OF SUBJECT MATTER**

G09F9/30(2006.01)i; G09G3/30(2006.01)i

According to International Patent Classification (IPC) or to both national classification and IPC

**B. FIELDS SEARCHED**

Minimum documentation searched (classification system followed by classification symbols)

IPC: G09F, G09G

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 微晶玻璃, 白光, 白色, 显示, 色品, minicrystal, glass, white, display, CIE, chromaticity

**C. DOCUMENTS CONSIDERED TO BE RELEVANT**

| Category* | Citation of document, with indication, where appropriate, of the relevant passages | Relevant to claim No. |
|---|---|---|
| A | CN 111276593 A (WUYI UNIVERSITY) 12 June 2020 (2020-06-12) description, paragraphs 0010-0058, and figures 1-12 | 1-7 |
| A | CN 103238174 A (SCHOTT AG.) 07 August 2013 (2013-08-07) entire document | 1-7 |
| A | CN 114956580 A (ZHEJIANG CHANGXING NUOWAN TEKE GLASS CO., LTD.) 30 August 2022 (2022-08-30) entire document | 1-7 |
| A | US 2010089905 A1 (EUROKERA S.N.C.) 15 April 2010 (2010-04-15) entire document | 1-7 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **14 June 2023** | **23 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

### INTERNATIONAL SEARCH REPORT
#### Information on patent family members

International application No.

**PCT/CN2022/138841**

| Patent document cited in search report | | | Publication date (day/month/year) | Patent family member(s) | | | Publication date (day/month/year) |
|---|---|---|---|---|---|---|---|
| CN | 111276593 | A | 12 June 2020 | WO | 2021164103 | A1 | 26 August 2021 |
| CN | 103238174 | A | 07 August 2013 | JP | 2014507673 | A | 27 March 2014 |
| | | | | JP | 6077456 | B2 | 08 February 2017 |
| | | | | EP | 2649609 | A1 | 16 October 2013 |
| | | | | EP | 2649609 | B1 | 26 September 2018 |
| | | | | US | 2013328946 | A1 | 12 December 2013 |
| | | | | US | 9443492 | B2 | 13 September 2016 |
| | | | | WO | 2012076412 | A1 | 14 June 2012 |
| | | | | KR | 20130052671 | A | 22 May 2013 |
| | | | | KR | 101499369 | B1 | 05 March 2015 |
| | | | | EP | 3319073 | A1 | 09 May 2018 |
| | | | | EP | 3319073 | B1 | 05 August 2020 |
| CN | 114956580 | A | 30 August 2022 | | None | | |
| US | 2010089905 | A1 | 15 April 2010 | WO | 2008110737 | A2 | 18 September 2008 |
| | | | | WO | 2008110737 | A3 | 30 April 2009 |
| | | | | KR | 20090115943 | A | 10 November 2009 |
| | | | | KR | 101544945 | B1 | 18 August 2015 |
| | | | | ES | 2659796 | T3 | 19 March 2018 |
| | | | | EP | 2132490 | A2 | 16 December 2009 |
| | | | | EP | 2132490 | B1 | 17 January 2018 |
| | | | | FR | 2913262 | A1 | 05 September 2008 |
| | | | | FR | 2913262 | B1 | 06 September 2013 |
| | | | | JP | 2010520144 | A | 10 June 2010 |
| | | | | JP | 5680855 | B2 | 04 March 2015 |
| | | | | US | 8592729 | B2 | 26 November 2013 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 103250004 B
- CN 201180059416
- GB 39772008 T
- GB 39782008 T
- GB 39792008 T
- GB 268094 T